# EUROPEAN PATENT SPECIFICATION

(11) **EP 4 246 302 B1**
(45) Date of publication and mention of the grant of the patent: **27.11.2024**
(21) Application number: 22162543.7
(22) Date of filing: 16.03.2022
(51) Int. Cl.: G06F 3/12

(54) **METHOD FOR NESTING INPUT FILES INTO AN OUTPUT FILE TO BE PRINTED BY A PRINTING SYSTEM**
VERFAHREN ZUM VERSCHACHTELN VON EINGABEDATEIEN IN EINE VON EINEM DRUCKSYSTEM ZU DRUCKENDE AUSGABEDATEI
PROCÉDÉ D'IMBRICATION DE FICHIERS D'ENTRÉE DANS UN FICHIER DE SORTIE À IMPRIMER PAR UN SYSTÈME D'IMPRESSION

(43) Date of publication of application: 20.09.2023
(73) Proprietor: Canon Production Printing Holding B.V., 5914 HH Venlo (NL)
(72) Inventor: VULPE, Radu, Venlo (NL); CHESNOIU, Andrei C., Venlo (NL)
(74) Representative: Canon Production Printing IP Department

(56) References cited:
- CN-A- 111 241 805
- US-A1- 2016 210 088
- US-A1- 2020 159 474

## Description

### BACKGROUND OF THE INVENTION

The invention relates to a method for nesting a plurality of digital input files into a digital output file according to a predetermined nesting strategy, each digital input file being of a same predetermined digital filetype and having a size and a user unit value which is a multiplication factor of a maximum length or height defined for the same predetermined digital filetype, and the digital output file intended to be printed by a printing system.

The predetermined nesting strategy may be an arbitrary nesting strategy for nesting input files. For example, a first nesting strategy may be called "Left-Right", wherein a panel of the digital output file is filled starting from the lower left corner going right and filling rows to the top. For example, a second nesting strategy may be called "Bottom-Top", wherein a the panel of the digital output file is filled starting from the lower left corner going up and filling columns to the right.

The printing system may be a roll-based printing system. The roll-based printing system may be a flatbed printer.

The roll based printing system may be a roll to roll printing system or a roll to sheet printing system. Hereinafter the roll to roll printing system may also be called "roll to roll printer", "R2R printing system" or "R2R printer". Hereinafter the roll to sheet printing system may also be called "roll to sheet printer", "R2S printing system" or "R2S printer". Hereinafter the flatbed printer may be called a "FB printer".

The term "printing" is used herein as a general term for any marking of a recording medium with any marking material. As a synonym, the term "image forming" may be used. Recording mediums may comprise paper, flexible plastic, metal foils, textiles and so on. Marking materials may comprise ink, metal, varnish, toner and so on. "Marking" may be any process by which the marking material is applied to the recording medium.

For convenience reasons a digital input file will hereinafter also be referred to as an "input file" and a digital output file will hereinafter also be referred to as an "output file". In general, a digital file will hereinafter also be referred to as a "file".

### BACKGROUND ART

In printers a recording medium is transported from an input holder along a paper path comprising a marking unit to an output holder. In particular, in roll-fed printers, a recording medium such as paper is wound up on an input roll and then fed into, and guided along, a path through the printer, unwinding the input roll by and by along the process. The input roll may have a very large length which makes the input roll suitable for printing large files. For example, a large file may be input that contains a plurality of nested files according to a predetermined nesting strategy.

In this way, the recording medium is fed to a marking unit of the printer which applies a marking material (prints) onto the recording medium.

Roll-to-roll printers are a common type of roll-fed printers and are characterized in that the recording medium is, after images have been printed on it, wound up on an output holder of an output roll by and by along the process.

Some printers comprise a cutting unit configured to cut the recording medium after images have been printed on it such that the printer does not output the entire contiguous recording medium but instead cut pieces of it. An example of such a printer is a R2S printer.

Rigids or large sheets may be printed on both sides by means of a flatbed printer and cut afterwards by a cutter. The method of the invention is also applicable to flatbed printing production.

Roll-fed printers are very efficient devices for forming a large number of images requiring a large amount of the recording medium, as the wound-up input rolls are comparatively easy to handle by both the printers and their operating personnel. Accordingly, little or no supervision by personnel is needed for roll-fed printers, especially for roll-to-roll printers, as the marked recording medium is automatically stored on the output roll.

A cutting machine may be installed next to the printer for cutting the printed front side image out of the recording medium after printing the front side image on the recording medium. The cutting machine is able to read the cut marks provided to the front side image in order to establish an accurate cutting process.

According to US2020/159474 A1 a document which is received in order to be printed directly from a computing device. The document is converted into a portable document format (PDF) file by a PDF converter. The PDF converter separates the document into different groups that are processed separate to generate multiple PDF files for the document.

According to US2016/210088 A1 a processing apparatus performs a nesting method by solving partial overlap in content extension areas of print jobs after nesting.

Nowadays a digital input files may have a maximum length and width according to the filetype of the digital input file. For instance, a digital input file in a portable document format, also called a PDF file, currently has a maximum length of approximately 5 meter. In order to go above this maximum value a user unit value are used. A user unit value of 1 is a default value. A user unit value higher than 1 is used to increase the maximum size of the PDF file by multiplying the width and length with the user unit value.

A problem arises when nesting digital input files which have a different user unit value into one digital output file. Taking the user unit value of one of the digital input files as a user unit value of the one digital output file may not be enough for nesting all digital input files. On the other hand a ratio and size of each of the digital input files need to be preserved when nesting the digital input files into the one digital output file.

It is objective of the invention to solve the nesting problem mentioned here-above and to have a method for nesting a plurality of digital input files into a digital output file according to the predetermined nesting strategy, which method delivers an optimal image quality of the digital output file. It is also desirable to have a printing system and a controller for the printing system which is capable of executing such a method.

### SUMMARY OF THE INVENTION

The objective of the invention is achieved by the method according to claim 1.

By doing so, all digital input files fit into the digital output file and the ratio and the size of each of the digital input files is preserved when nesting the digital input files into the one digital output file. The method delivers a same image quality for the plurality of nested digital input files as when the plurality of digital input files would be printed separately. By applying the method according to the present invention an operator of the printer has less work on nesting the files which increases the speed and productivity of the printer.

According to an embodiment at least two digital input files of the plurality of digital input files have different user unit values. When at least two digital input files have different user unit values the user unit value may be bigger or smaller than a user unit value of one of the digital input files so that a scaling factor is to be found that preserves the size and ratio of each of the nested digital input files.

According to an embodiment of the method the size of each digital input file has a width and a height expressed in points, pixels or a standard length unit like millimeter or inch.

According to an embodiment the user unit value of the digital output file is smaller than the user unit value of each of the digital input files due to the predetermined nesting strategy. There may be a case wherein a digital input file has a bigger user unit value than it needs to have (for example a file that is 3mx3m and has user unit value of 10 can be one of the digital input files). When such a digital input file is merged with another digital input file that has 1.5mx1.5m with user unit value of 2 then the resulting digital output file does not need to have a user unit greater than 1. A digital input file that has a big user unit value and does not need the big user unit value can be a case of a file that inherits the user unit value from an older file that needed it and after some operations (crop, change content etc.) the digital input file has become smaller and does not necessarily need such a big user unit value but it is still a valid digital input file.

According to an embodiment the method comprises the step of for each digital input file determining a dedicated offset of the digital input file in the digital output file.

The present invention also relates to a print controller of a printing system, wherein the print controller is configured to receive a plurality of digital input files for nesting into a digital output file and to apply the method according to any one of the preceding claims.

The present invention also relates to a printing system comprising a print controller according to the present invention, wherein the printing system is configured to print the digital output file on a recording medium.

According to an embodiment the printing system is a roll-based printing system or a flatbed printing system.

The present invention also relates to a software medium comprising executable program code to cause, when invoked, a computer to execute the steps of a method according to the present invention.

Additional advantages, and the solution of additional problems, will be apparent from the subject-matter of the dependent claims as well as from the description and the drawings.

### BRIEF DESCRIPTION OF THE DRAWINGS

The present invention will become more fully understood from the detailed description given herein-below and the accompanying schematic drawings which are given by way of illustration only, and thus are not limitative of the present invention, and wherein:
- FIG. 1: schematically shows printing systems according to the invention;
- FIG. 2: schematically shows a user space of a digital input file according to the method of the present invention;
- FIG. 3: schematically shows page dictionaries of a PDF file according to an embodiment of the invention;
- FIG. 4: shows an example of an application of the method according to the invention;
- FIG. 5: shows a schematic workflow diagram of the method according to the invention; and
- FIG. 6: schematically shows a non-transitory software medium according to the invention.

### DETAILED DESCRIPTION OF THE DRAWINGS

The present invention will now be described with reference to the accompanying drawings, wherein the same reference numerals have been used to identify the same or similar elements throughout the several views, and in some instances throughout the several embodiments.

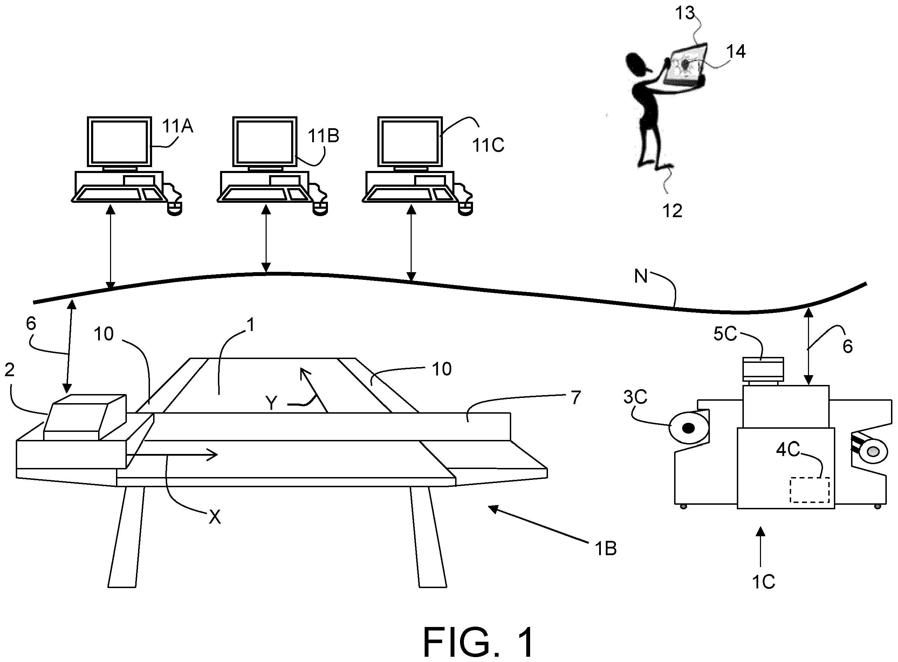

FIG. 1 shows two printers 1B, 1C which are connected to a network N. The printers 1B,1C are configured to execute the steps of the method according to the present invention.

FIG. 1 shows schematically a printing system 1C which comprises a print controller 11C for controlling the printing process on an input roll of recording medium. The printing system 1C comprises at least one input holder 3C for holding the recording medium which is intended to be used for printing of print jobs from the print job queue of the printing system 1C by means of the marking unit (not shown). The marking unit may comprise at least one print head for adhering marking material like ink or toner to the recording medium. The recording medium in the least one input holder 3C is transported to a marking unit of the printing system 1C. The printing system 1C also comprises a local user interface 5C. While a specific printing system is shown and described, the disclosed embodiments may be used with other types of a printing system such as an inkjet printing system, an electrographic printing system, a cut sheet printing system, a roll fed printing system, a flatbed printing system, etc.

FIG. 1 also shows a print system 1B comprising a number of workstations 11A, 11B, 11C which may be personal computers or other devices for preparing image data for prints to be printed. These workstations have access to the network N for transferring print jobs comprising the image data to a print controller 11B that is configured to receive the print jobs for prints and derive pass images. The print controller 11B is part of the print system 1B connected via a connection 6. The print system 1B further comprises a print head 2 attached to an armature 7 for applying colorants, for example cyan (C), magenta (M), yellow (Y), black (K) and white (W) colorant, or varnish to pieces of flat print media placed on a flatbed area 1 in order to obtain a printed image. The armature 7 may be a gantry above the flatbed area 1 as shown in FIG. 1 or a robot arm (not shown) moving in a plurality of directions over the flatbed area 1. The flatbed area 1 is the surface of the flatbed which is at least partially printable by the print head 2. The pieces of media may larger than the flatbed area, in which case an image which is going to cover the whole piece of media must be printed into a plurality of parts of the image. In the latter case the print system 1B may be implemented as a roll to roll printing system (not shown). The print head 2 reciprocally scans the flatbed area 1 in the second direction X along a gantry 7 perpendicular to a first direction Y of the gantry 7 over the flatbed area 1 along guiding parts 10. A print head which is as wide as the flatbed area may also be envisaged within the scope of the invention. Such a print head may be moveable in at least one direction over the flatbed area 1.

The printing systems 1B, 1C are digitally connected to a network N for bi-directional data signal transfer. The printing systems 1B, 1C comprise a print controller 11B, 11C respectively for controlling the printing process. The print controller 11B, 11C is a computer or server or a workstation, connected to the print engine of the printing system 1B, 1C respectively and connected to the digital environment of the printing system, for example the network N for transmitting a submitted print job to the printing system. The print controllers may alternatively be positioned inside the printing systems 1B, 1C.

A print engine of the printing system 1B, 1C comprises a print head or print assembly for ejecting and/or fixing marking material to the recording medium. In case of print system 1C there is a paper path for transporting the recording medium from the input holder 3C to the print head or print assembly. The print head or print assembly may be an inkjet print head, a direct imaging toner assembly or an indirect imaging toner assembly. While a recording medium is transported along the paper path, the recording medium receives the marking material from the print head or print assembly before the printed recording medium is output in an output holder.

An operator 12 present in the neighbourhood of the printing systems 1B, 1C or even in another building than the printing systems 1B, 1C may use a remote wireless user interface 13 displaying printer processing information 14 of the printers 1B, 1C. The local user interface 5C and the remote user interface 13 are suitable for displaying user interface windows for controlling the print job queue residing in the print controller 4C respectively. The local user interface 5C and the wireless remote user interface 13 are suitable for displaying images to be printed according to the invention, In an embodiment the user interface comprises a window (not shown) for selecting images which are going to be nested according to the method of the invention.

In another embodiment a computer in the network N has a wired (or even wireless) remote user interface for displaying the images for nesting according to the invention and controlling the print job queue of the printing systems 1B, 1C like the work stations 11B, 11C in FIG. 1.

The print controller 11B, 4C comprises a memory comprising received image files to be printed. The print controller 11B, 4C is configured to receive the image files to be printed on the recording medium and to apply electronic signals to the user interface 11A, 5C, 13 based on the received images to show the received images in an appropriate user interface window.

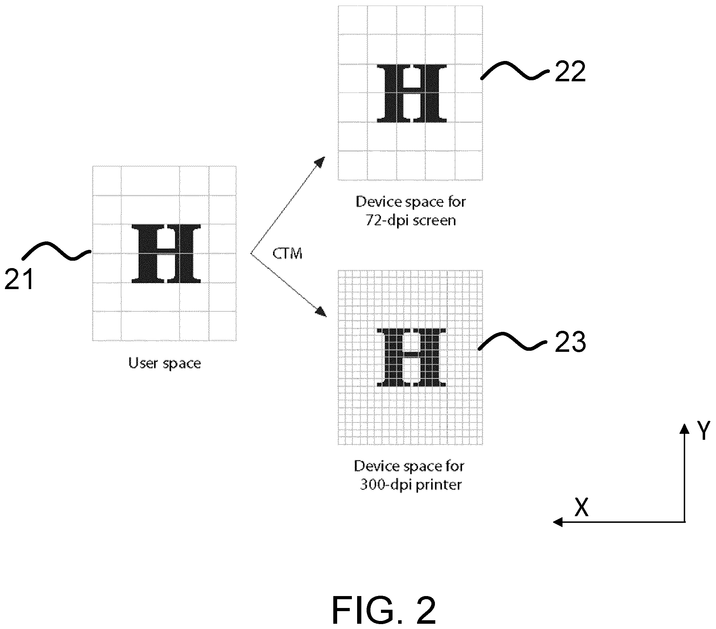

FIG. 2 shows a schematic view of a digital image of the character "H". A user space 21 of the digital image is shown. The user space 21 may for example be transformed by a coordinate transform matrix CTM into a device space 22 of the digital image on a 72-dpi screen or a device space 23 of the digital image for a 300-dpi printer.

A unit in a user space 21 is called a user space unit which is defined by a user unit value of the page comprising the character "H". The default user space unit is defined by a user unit having a default value of 1. A user space of a digital image defaults to 72 points per inch with an origin at the bottom left of the digital image.

For a digital image in a portable document format (PDF) it is possible to change a number of the user unit value. Such a change can be established through the use of a coordinate transform in the page content. Alternatively such a change can be established through the presence of a user unit key in a page dictionary of the page of the digital image.

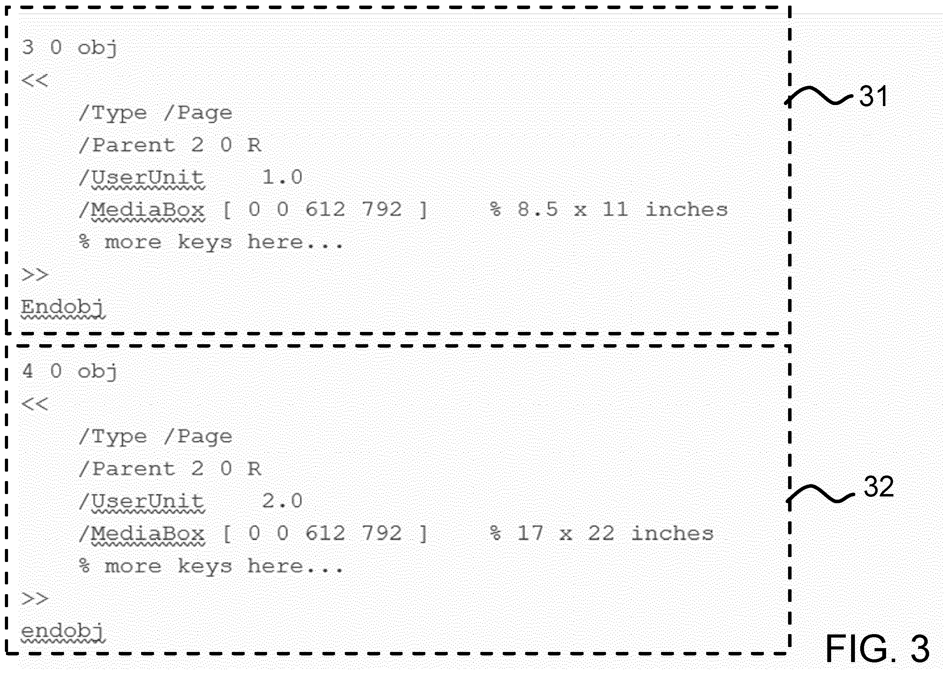

FIG. 3 shows an example in PDF syntax of a page dictionary of a digital image. The first PDF syntax 31 of the digital page has a default user unit value 1 and a second PDF syntax of the digital page has a user unit value 2. In the first PDF syntax the media box of the digital page has a dimension of 8.5 by 11 inches, i.e. a Letter format type. By introducing the user unit value of 2 in the second PDF syntax 32 for the digital page the media box of the digital page gets a dimension of 17 by 22 inches.

Currently the maximum length for a PDF file is approximately 5 meters. In order to go above the maximum value, user units (which default value is 1) are used according to the invention that increase the size of the PDF by multiplying a width and length of the PDF file with the user unit value.

When nesting files that have different user unit values a user unit value for the nested file has to be determined. On the other hand a scale factor for the input files is needed so that the ratio and size of each nested file remains the same.

For example, a first input file of 2 by 2 meters which has a user unit value of 1 and a second input file of 6 by 6 meters which has a user unit value of 2 need to be nested into an output file.

When both first and second input file are given the user unit value of 1, the second input file will become smaller, i.e. the second input file will become 3 by 3 meters.

When both first and second input file are given the user unit value of 2, the first input file will become bigger, i.e. the first input file will become 4 by 4 meters.

The total height - and also the total width - of the first and second input file is 2 + 6 = 8 meters, a user unit value of 2 would be sufficient to nest the first and second input file into the output file, since 8 meters does not exceed 2 * 5 = 10 meters, wherein 5 meters is the maximum height/width for the default user unit value of 1 and thus 10 meters is the maximum height/width for the user unit value of 2.

The scaling factors for the first and second input file are determined as follows in order to preserve the original size of each of the first and second input file.

Since the user unit value of the output file equals 2 and the user unit value of the second input file also equals 2, no scaling is needed, i.e. the scaling factor is 1.

Thus the width and height of the second input file will be multiplied by 1.

Since the user unit value of the nested file equals 2 and the user unit value of the second input file equals 1, downscaling is needed for the first input file. The scaling factor for the first input file equals ½ being the quotient of the user unit value of the first input file (1) and the user unit value of the output file (2). Thus the width and the height of the first input file will be multiplied by ½.

In stead of downscaling on the input files, upscaling is also possible. Alternatively a user unit value of the output file may be selected in such a way that one part of the input files is scaled down and another part of the input files is scaled up.

Depending on the used nesting strategy a final width and a final height of the output file is calculated and it is determined approximately how many times the total width or the total height - whichever is bigger - can be divided by 5. The result may be the user unit value for the nested output file. For example, a 33 meters long file will have a user unit value of 7, a 13 meters long file will have a user unit value of 3.

The inventors have completed tests for printing and comparing files from which the inventors concluded that the image quality of the output file is not altered with respect to the image quality of each input file when printed separately. There is no difference when scaling up or scaling down, or, with raster files or vector files. No pixels will be removed from or added to the original input file by applying the method according to the present invention.

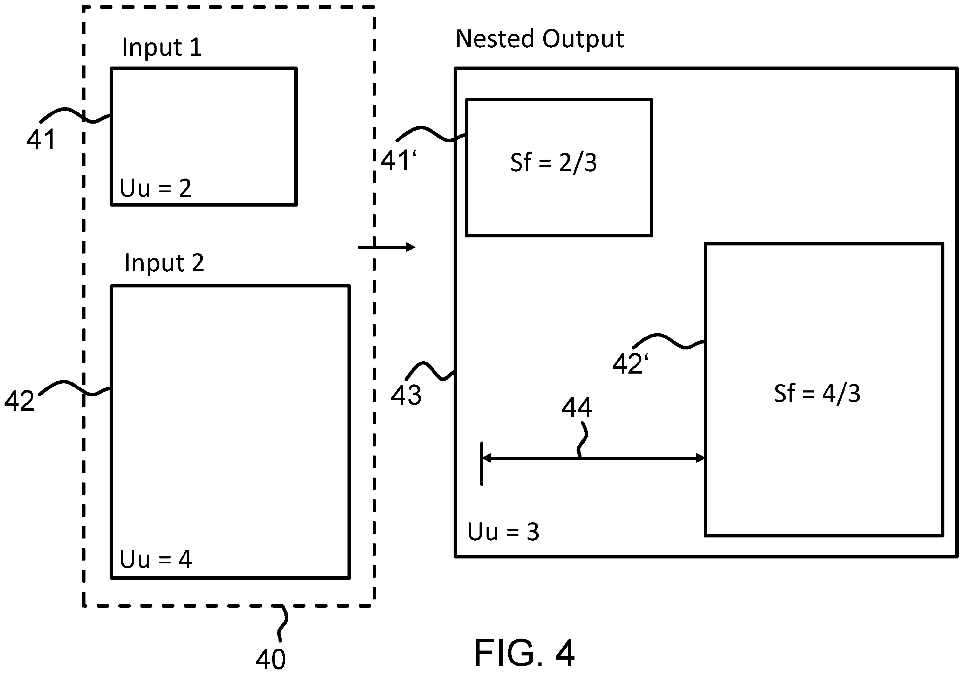

FIG. 4 shows another example of application of the method according to the invention. A set 40 of two input files 41, 42 need to be nested into an output file 43.

A first input file 41 has a user unit value of 2. A second input file 42 has a user unit value of 4. The user unit value of the output file 43 is selected to be equal to 3. The scale factor for the first input file 41 equals 2/3. When applying the scale factor 2/3 to the first input file 41, the first input file 41 will transform into a first input file 41' nested in the output file 43. The scale factor for the second input file 42 equals 4/3. When applying the scale factor 4/3 to the second input file 42, the second input file 42 will transform into a second input file 42' nested in the output file 43.

For each input file 41, 42 an offset may be defined when placing the input file into the nested output file 43.

In FIG. 4 the first input file 41' nested in the output file 43 has a minimum horizontal offset, while the second input file 42' nested in the output file 43 has a larger horizontal offset 44.

According to an embodiment a user interface of the printing system is configured to allow a user input of a sequence order of the input files in the output file and an offset of each input file in the output file.

According to an embodiment the offset is determined by a vertical offset value and a horizontal offset value.

According to an embodiment the offset values of the input values are taken into account when determining the user unit value of the output file.

According to an embodiment the offset values of the input files are determined by the predetermined nesting strategy.

In the example of FIG. 4 the size of objects 41 and 41' and the size of objects 42 and 42' in cm/inch will be the same so the image quality of the images will not be lost. From tests executed by the inventors of scaling the user units up/down while keeping the size of the content, it may be concluded that the scaling does not affect the image quality.

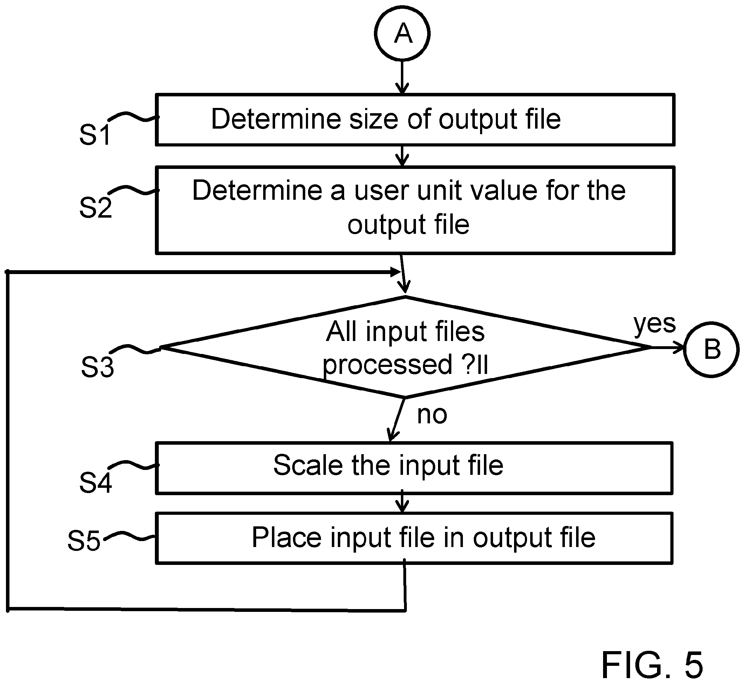

FIG. 5 shows a schematic flow diagram illustrating a method according to the invention. The method is suitable for controlling a printing system for printing large nested files comprising a plurality of images having different user unit values. The printing system comprises a print engine and a print controller for receiving of the digital input files and managing the printing of digital nested files on the recording medium. Each digital input file is characterized by a same predetermined digital filetype and has a size and a user unit value which user unit value is a multiplication factor of a maximum length or height defined for the same predetermined digital filetype. The method starts in a starting point A and leads to a first step S1.

In the first step S1 a size of the digital output file is determined which is needed to accommodate the plurality of digital input files according to the predetermined nesting strategy.

In a second step S2 a user unit value is determined for the digital output file which corresponds to the determined size of the digital output file.

In a third step S3 an iteration takes place over the digital input files. When the iteration is ended and all input files are processed, the method proceeds to an end point B of the method.

In a fourth step S4 the digital input file is scaled with a scale factor such that the size and an aspect ratio of the digital input file is kept in the digital output file when using the user unit value which is determined for the digital output file. The scale factor is equal to the determined user unit value of the digital output file divided by the user unit value of the digital input file. The scale factor basically modifies the digital input file in order to keep the size the same when the user unit of the output file is applied. After all the scaling up/down the inventors did not observe any loss of data. The scale factor may be calculated on a backend of a software implementation ot the method so that the scale factor cannot be modified or seen by the user. PDF's are scaled by modifying a transformation matrix. For example a scale method is used that is available in a software PDF manipulation library.

In a fifth step S5 the scaled digital input file is placed into the digital output file. A possible offsets of the input file is taken into account. The method returns to the third step S3.

The method ends in the end point B.

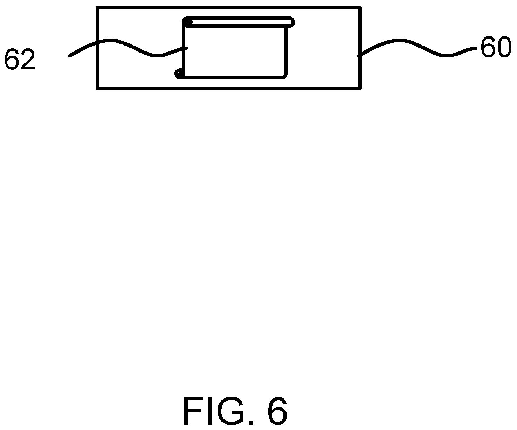

FIG. 6 schematically shows a non-transitory software medium 60 according to the invention. The software medium 60 comprises executable code 62 configured to, when executed, perform the method according to the invention, e.g. as described with respect to either the printing system 1B, 1C shown in FIG. 1 or the method of controlling the printing system 1B, 1C according to any or all of the FIGs. 1 - 5 and/or according to any of the variants and modifications of the printing system 1B, 1C and/or of the method described herein.

The non-transitory software medium 60 may, specifically, be formed as a CD or a CD-ROM, a DVD or a DVD-ROM, a BluRay disc or a BluRay-ROM disc, a magnetic hard drive, a solid state disk (SSD) hard drive, a USB memory device and so on.

While detailed embodiments of the present invention are disclosed herein, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure.

Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language).

## Claims

1. A method for nesting a plurality of digital input files (41, 42) into a digital output file (43) according to a predetermined nesting strategy, each digital input file (41, 42) being of a same predetermined digital filetype and having a size and a user unit value which is a multiplication factor of a maximum length or height defined for the same predetermined digital filetype, and the digital output file (43) intended to be printed by a printing system (1B, 1C), the method comprises the steps of
- determining a size of the digital output file (43) which is needed to accommodate the plurality of digital input files (41, 42) according to the predetermined nesting strategy,
- determining a user unit value for the digital output file (43) which corresponds to the determined size of the digital output file (43), and
for each digital input file (41, 42)
- scaling the digital input file (41, 42) with a scale factor such that the size and an aspect ratio of the digital input file (41, 42) is kept in the digital output file (43) when using the user unit value which is determined for the digital output file (43), and
- placing the scaled digital input file (41', 42') into the digital output file (43),
wherein the scale factor is equal to the determined user unit value of the digital output file (43) divided by the user unit value of the digital input file (41, 42),
wherein the step of determining the size of the digital output file (43) comprises a substep of calculating a total width and a total height for the digital output file (43) which is in accordance with the predetermined nesting strategy, and
wherein the step of determining the user unit value for the digital output file (43) comprises the sub-steps of taking a biggest value of the total width and the total height for the digital output file (43), dividing said biggest value by the maximum length or height defined for the same predetermined digital filetype resulting in a number result, and rounding up the number result, and
wherein the predetermined digital filetype of each of the digital input files (41, 42) is a portable document format.

2. A method according to claim 1, wherein at least two digital input files (41, 42) of the plurality of digital input files have different user unit values.

3. A method according to claim 1 or 2, wherein the size of each digital input file (41, 42) has a width and a height expressed in points, pixels or a standard length unit like millimeter or inch.

4. A method according to any one of the preceding claims, wherein the user unit value of the digital output file (43) is smaller than the user unit value of each of the digital input files (41, 42) due to the predetermined nesting strategy.

5. A method according to any of the preceding claims, wherein the method comprises the step of for each digital input file (41, 42) determining a dedicated offset (44) of the digital input file (41, 42) in the digital output file (43).

6. A print controller (11B, 11C) of a printing system (1B, 1C), wherein the print controller (11B, 11C) is configured to receive a plurality of digital input files (41, 42) for nesting into a digital output file (43) and to apply the method according to any one of the preceding claims.

7. A printing system (1B, 1C) comprising a print controller (11B, 11C) according to claim 6, wherein the printing system (1B, 1C) is configured to print the digital output file (43) on a recording medium.

8. A printing system (1B, 1C) according to claim 7, wherein the printing system (1B, 1C) is a roll-based printing system or a flatbed printing system.

9. A software medium (60) comprising executable program code (62) to cause, when invoked, a computer to execute the steps of a method according to any one of claims 1 - 5.

## Patentansprüche

1. Verfahren zum Verschachteln einer Vielzahl von digitalen Eingabedateien (41, 42) in eine digitale Ausgabedatei (43) gemäß einer vorbestimmten Verschachtelungsstrategie, wobei jede digitale Eingabedatei (41, 42) von demselben vorbestimmten digitalen Dateityp ist und eine Größe und einen Benutzereinheitswert hat, der ein Multiplikationsfaktor einer maximalen Länge oder Höhe ist, die für denselben vorbestimmten digitalen Dateityp definiert ist, und wobei die digitale Ausgabedatei (43) dazu bestimmt ist, durch ein Drucksystem (1B, 1C) gedruckt zu werden, wobei das Verfahren die folgenden Schritte umfasst
- Bestimmen einer Größe der digitalen Ausgabedatei (43), die erforderlich ist, um die Vielzahl der digitalen Eingabedateien (41, 42) gemäß der vorbestimmten Verschachtelungsstrategie unterzubringen,
- Bestimmen eines Benutzereinheitswertes für die digitale Ausgabedatei (43), der der bestimmten Größe der digitalen Ausgabedatei (43) entspricht, und
für jede digitale Eingabedatei (41, 42)
- Skalieren der digitalen Eingabedatei (41, 42) mit einem Skalierungsfaktor, so dass die Größe und ein Seitenverhältnis der digitalen Eingabedatei (41, 42) in der digitalen Ausgabedatei (43) beibehalten wird, wenn der für die digitale Ausgabedatei (43) bestimmte Wert der Benutzereinheit verwendet wird, und
- die skalierte digitale Eingabedatei (41', 42') in die digitale Ausgabedatei (43) einfügen, wobei der Skalierungsfaktor gleich dem ermittelten Benutzereinheitenwert der digitalen Ausgabedatei (43) geteilt durch den Benutzereinheitenwert der digitalen Eingabedatei (41, 42) ist,
wobei der Schritt des Bestimmens der Größe der digitalen Ausgabedatei (43) einen Unterschritt des Berechnens einer Gesamtbreite und einer Gesamthöhe für die digitale Ausgabedatei (43) umfasst, die mit der vorbestimmten Verschachtelungsstrategie übereinstimmt, und
wobei der Schritt des Bestimmens des Benutzereinheitswertes für die digitale Ausgabedatei (43) die Unterschritte des Nehmens eines größten Wertes der Gesamtbreite und der Gesamthöhe für die digitale Ausgabedatei (43), des Teilens des größten Wertes durch die maximale Länge oder Höhe, die für denselben vorbestimmten digitalen Dateityp definiert ist, was zu einem Zahlenergebnis führt, und des Aufrundens des Zahlenergebnisses umfasst, und
wobei der vorbestimmte digitale Dateityp jeder der digitalen Eingabedateien (41, 42) ein portables Dokumentenformat ist.

2. Verfahren nach Anspruch 1, wobei mindestens zwei digitale Eingabedateien (41, 42) aus der Vielzahl der digitalen Eingabedateien unterschiedliche Werte für die Benutzereinheit haben.

3. Verfahren nach Anspruch 1 oder 2, wobei die Größe jeder digitalen Eingabedatei (41, 42) eine Breite und eine Höhe hat, die in Punkten, Pixeln oder einer Standardlängeneinheit wie Millimeter oder Zoll ausgedrückt sind.

4. Verfahren nach einem der vorhergehenden Patentansprüche, wobei der Benutzereinheitswert der digitalen Ausgabedatei (43) aufgrund der vorgegebenen Verschachtelungsstrategie kleiner ist als der Benutzereinheitswert jeder der digitalen Eingabedateien (41, 42).

5. Verfahren nach einem der vorhergehenden Patentansprüche, wobei das Verfahren den Schritt umfasst, für jede digitale Eingabedatei (41, 42) einen dedizierten Offset (44) der digitalen Eingabedatei (41, 42) in der digitalen Ausgabedatei (43) zu bestimmen.

6. Eine Drucksteuerung (11B, 11C) eines Drucksystems (1B, 1C), wobei die Drucksteuerung (11B, 11C) so konfiguriert ist, dass sie eine Vielzahl von digitalen Eingabedateien (41, 42) zum Verschachteln in eine digitale Ausgabedatei (43) empfängt und das Verfahren nach einem der vorhergehenden Patentansprüche anwendet.

7. Drucksystem (1B, 1C) mit einer Drucksteuerung (11B, 11C) nach Anspruch 6, wobei das Drucksystem (1B, 1C) so konfiguriert ist, dass es die digitale Ausgabedatei (43) auf ein Aufzeichnungsmedium druckt.

8. Ein Drucksystem (1B, 1C) nach Anspruch 7, wobei das Drucksystem (1B, 1C) ein rollenbasiertes Drucksystem oder ein Flachbettdrucksystem ist.

9. Ein Softwaremedium (60), das ausführbaren Programmcode (62) enthält, um einen Computer zu veranlassen, die Schritte eines Verfahrens nach einem der Patentansprüche 1 - 5 auszuführen, wenn er aufgerufen wird.

## Revendications

1. Procédé d'imbrication d'une pluralité de fichiers d'entrée numériques (41, 42) dans un fichier de sortie numérique (43) selon une stratégie d'imbrication prédéterminée, chaque fichier d'entrée numérique (41, 42) étant d'un même type de fichier numérique prédéterminé et ayant une taille et une valeur d'unité utilisateur qui est un facteur de multiplication d'une longueur ou d'une hauteur maximale définie pour le même type de fichier numérique prédéterminé, et le fichier de sortie numérique (43) étant destiné à être imprimé par un système d'impression (1B, 1C), le procédé comprend les étapes suivantes
- déterminer la taille du fichier de sortie numérique (43) nécessaire pour accueillir la pluralité de fichiers d'entrée numériques (41, 42) conformément à la stratégie d'imbrication prédéterminée,
- déterminer une valeur d'unité utilisateur pour le fichier de sortie numérique (43) qui correspond à la taille déterminée du fichier de sortie numérique (43), et
pour chaque fichier d'entrée numérique (41, 42)
- mettre à l'échelle le fichier d'entrée numérique (41, 42) avec un facteur d'échelle tel que la taille et un rapport d'aspect du fichier d'entrée numérique (41, 42) soient conservés dans le fichier de sortie numérique (43) lors de l'utilisation de la valeur d'unité utilisateur déterminée pour le fichier de sortie numérique (43), et
- placer le fichier d'entrée numérique mis à l'échelle (41', 42') dans le fichier de sortie numérique (43),
le facteur d'échelle est égal à la valeur de l'unité utilisateur déterminée du fichier de sortie numérique (43) divisée par la valeur de l'unité utilisateur du fichier d'entrée numérique (41, 42),
dans lequel l'étape de détermination de la taille du fichier de sortie numérique (43) comprend une sous-étape de calcul d'une largeur totale et d'une hauteur totale pour le fichier de sortie numérique (43) qui est conforme à la stratégie d'imbrication prédéterminée, et
dans lequel l'étape consistant à déterminer la valeur de l'unité utilisateur pour le fichier de sortie numérique (43) comprend les sous-étapes suivantes : prendre la plus grande valeur de la largeur totale et de la hauteur totale pour le fichier de sortie numérique (43), diviser cette plus grande valeur par la longueur ou la hauteur maximale définie pour le même type de fichier numérique prédéterminé, ce qui donne un résultat numérique, et arrondir le résultat numérique à la valeur supérieure, et
dans lequel le type de fichier numérique prédéterminé de chacun des fichiers d'entrée numériques (41, 42) est un format de document portable.

2. Procédé selon la revendication 1, dans lequel au moins deux fichiers d'entrée numériques (41, 42) de la pluralité de fichiers d'entrée numériques ont des valeurs d'unité utilisateur différentes.

3. Procédé selon la revendication 1 ou 2, dans lequel la taille de chaque fichier d'entrée numérique (41, 42) a une largeur et une hauteur exprimées en points, en pixels ou en une unité de longueur standard comme le millimètre ou le pouce.

4. Procédé selon l'une quelconque des revendications précédentes, dans lequel la valeur unitaire d'utilisateur du fichier numérique de sortie (43) est inférieure à la valeur unitaire d'utilisateur de chacun des fichiers numériques d'entrée (41, 42) en raison de la stratégie d'imbrication prédéterminée.

5. Procédé selon l'une quelconque des revendications précédentes, dans lequel le procédé comprend l'étape consistant, pour chaque fichier d'entrée numérique (41, 42), à déterminer un décalage dédié (44) du fichier d'entrée numérique (41, 42) dans le fichier de sortie numérique (43).

6. Contrôleur d'impression (11B, 11C) d'un système d'impression (1B, 1C), dans lequel le contrôleur d'impression (11B, 11C) est configuré pour recevoir une pluralité de fichiers d'entrée numériques (41, 42) destinés à être imbriqués dans un fichier de sortie numérique (43) et pour appliquer le procédé selon l'une quelconque des revendications précédentes.

7. Système d'impression (1B, 1C) comprenant un contrôleur d'impression (11B, 11C) selon la revendication 6, dans lequel le système d'impression (1B, 1C) est configuré pour imprimer le fichier de sortie numérique (43) sur un support d'enregistrement.

8. Système d'impression (1B, 1C) selon la revendication 7, dans lequel le système d'impression (1B, 1C) est un système d'impression à base de rouleaux ou un système d'impression à plat.

9. Support logiciel (60) comprenant un code de programme exécutable (62) pour amener, lorsqu'il est invoqué, un ordinateur à exécuter les étapes d'un procédé selon l'une quelconque des revendications 1 - 5.
